(19) **Europäisches Patentamt**

**European Patent Office**

**Office européen des brevets**

(11) **EP 1 176 412 A2**

(12) **EUROPEAN PATENT APPLICATION**

(43) Date of publication:
**30.01.2002 Bulletin 2002/05**

(51) Int Cl.⁷: **G01M 15/00**

(21) Application number: **01650089.4**

(22) Date of filing: **25.07.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **26.07.2000 US 220732 P**<br>**11.09.2000 US 231617 P**<br>**11.10.2000 US 239528 P**<br>**13.12.2000 US 255605 P**<br>**12.06.2001 US 297463 P**<br><br>(71) Applicant: **SENSORS, INC.**<br>**Saline Michigan 48176 (US)**<br><br>(72) Inventors:<br>• **Reading, Andrew R.**<br>**Rochester Hills, Michigan 48309 (US)** | • **Ensfield, Carl D.**<br>**Dexter, Michigan 48130 (US)**<br>• **Eden, Gideon**<br>**Ann Arbor, Michigan 48104 (US)**<br>• **Rauschl, Susan**<br>**Chelsea, Michigan 48118 (US)**<br>• **Nevius, Timothy A.**<br>**Saline, Michigan 48176 (US)**<br>• **Wiegleb, Gerhard**<br>**58849 Herscheid (DE)**<br>• **Zummer, Robert K.**<br>**Ann Arbor, Michigan 48103 (US)**<br>• **Shah, Atul**<br>**Ann Arbor, Michigan 48105 (US)**<br><br>(74) Representative: **Brophy, David et al**<br>**F.R. Kelly & Co. 27 Clyde Road Ballsbridge**<br>**Dublin 4 (IE)** |

(54) **Vehicle emission sampling and analysis assembly**

(57)     A vehicle gas emission analyzer assembly for a vehicle having a passenger compartment includes a gas analyzer system adapted to determine concentration and/or mass flow of at least one exhaust gas of an internal combustion engine. The analyzer may include a particular housing for the gas analyzer system. The gas analyzer system may include a hydrocarbon gas analyzer that is operated at a temperature that is sufficiently high to reduce deposits of hydrocarbon molecules present in the sample gas. The gas analyzer may include an ultraviolet source including a discharge lamp having a discrete emission line at an absorption frequency for a particular nitrogen-based gas.

⧜ FILTER

⊗ RESTRICTOR

**Fig. 4**

**Description**

Technical Field

This invention relates generally to vehicular emission gas analyzers and, more particularly, to vehicular gas analyzers which may be used in combination with measured parameters of a vehicle engine. The invention is useful as a gasoline engine analyzer, a diesel engine analyzer, or a turbine engine analyzer.

Background Art

United States Patent 5,099,680 assigned to the present assignee discloses an on-board system for analysis of a plurality of exhaust gas components and interfaces with the engine computer. This system contemplates the calculation of vehicle emissions in grams per mile, based on vehicle speed and engine displacement.

One difficulty in incorporating vehicular gas emission analyzers in vehicle design is that the conventional vehicular gas emission analyzer is a laboratory instrument, which is not conducive to including in a vehicle and is definitely incapable of being mounted external of the vehicle passenger compartment.

Moreover, conventional vehicle gas emission analyzers incorporate equipment which is not optimal for use on a vehicle. For example, conventional vehicle gas emission analyzers often use a known flame ionization device (FID) which combines hydrogen stored in a conventional tank with a burner. The vehicle manufacturer may not be able to guarantee safety of such a device, for example, with a can of gasoline in the trunk of a vehicle or other condition to which the vehicle may be exposed. Other components used in conventional vehicle gas emission analyzers add bulk to the assembly, thereby reducing the opportunity for producing a compact assembly that is adapted to be mounted on the vehicle. By way of example, conventional vehicle gas emission analyzers may utilize cooling devices for reducing the temperature of various temperature sensitive devices, moisture handling equipment for removing and disposing of condensate developed from the vehicle exhaust, and the like.

Summary of the Invention

The present invention provides a vehicle gas emission analyzer which is adapted for mounting on the vehicle. A vehicle gas emission analyzer assembly for a vehicle, according to the invention, includes a gas analyzer system adapted to determine concentration and/or mass of at least one exhaust gas and/or particulate matter of an internal combustion engine.

According to an aspect of the invention, the analyzer further includes a housing for the gas analyzer system. The housing may be substantially moisture impervious in order to be resistant to environmental elements. The housing may be adapted to mounting external of the vehicle and may include a communication channel for communicating data from the at least one gas detector to a system outside of the housing. The communication channel may be a wireless communication channel. The assembly may include vibration dampers to reduce vibration of components defining the gas analyzer system. The gas analyzer system may be a gasoline engine analyzer or a diesel engine analyzer. The gas analyzer system may include at least one gas analyzer that may be a non-dispersive infrared analyzer, a Fourier transform infrared analyzer, an ultraviolet analyzer, a mass spectrometer, a mass analyzer comprising an electromechanical oscillator holding a substrate onto which particulate matter can accumulate, or a mass analyzer comprising a filter substrate onto which particulate matter can accumulate.

According to another aspect of the invention, the housing for the gas analyzer system may have a length and a width wherein the ratio of the length to the width defines an aspect ratio of the housing. According to this aspect of the invention, the aspect ratio of the housing is greater than or equal to 2. The housing may be in the form of a cylinder and may be a circular cylinder. An interface may be provided for retrieving measured parameters of a vehicle engine with the measured parameters combined with an output of the gas analyzer system. The measured parameters may be in a serial data stream. Means may be provided for measuring flow rate of the emissions of the vehicle, such as a flowmeter. The housing may have a generally aerodynamic shape and may be resistant to penetration by moisture. The gas analyzer system may include at least one gas analyzer that may be a non-dispersive infrared analyzer, a Fourier transform infrared analyzer, an ultraviolet analyzer, a mass spectrometer, a mass analyzer comprising an electromechanical oscillator holding a substrate onto which particulate matter can accumulate, or a mass analyzer comprising a filter substrate onto which particulate matter can accumulate.

According to another aspect of the invention, the housing for the gas analyzer system may define multiple internal zones, each of the zones at a different temperature. The analyzer assembly may be used for calculating the mass of the exhaust gas in grams per mile driven by the vehicle. Each of the internal zones may have a substantially consistent temperature in a direction laterally of the housing and the zones may vary in temperature from each other in a direction longitudinally of the housing. The analyzer assembly may include a volumetric flow meter that is adapted to be attached to the exhaust tailpipe of the vehicle, wherein mass flow is determined by resolving the measured concentration and volumetric exhaust gas flow measured by the volumetric flow meter. The gas analyzer assembly may include a probe that is adapted to be connected with a vehicle tailpipe. The analyzer assembly may include a heated line connecting the probe with the housing. The gas analyzer system may operate substantially uninfluenced by supplemental cooling. The gas analyzer system may operate at a temperature that is at or above the dew point of the vehicle exhaust gas.

The gas analyzer system may further include calculating means for compensating the emission parameter for the effect of humidity present in the exhaust gas. The gas analyzer may include a heated device for measuring concentration of hydrocarbon, the heated device being at a temperature sufficiently high to reduce the deposit of hydrocarbon materials on the heated device. The heated device may include an infrared-based gas concentration reader. The heated device may be a flame ionization device. The device for measuring concentration of hydrocarbon may be heated to a temperature at or above 60 degrees centigrade, particularly for spark-ignition engines. The device for measuring concentration of hydrocarbon may be heated to a temperature at or above 175 degrees centigrade, particularly for compression-ignition engines. The gas analyzer may include at least one device for measuring $NO_X$ which operates substantially without supplemental cooling of the exhaust gas and which may utilize ultraviolet detection techniques. The device for measuring $NO_X$ may utilize a heated zirconia detector or an electro-chemical cell. The gas analyzer may include at least one device for measuring $NO_X$ which utilizes ultraviolet detection techniques which may include an ultraviolet discharge lamp. The gas analyzer may include at least one gas detector to measure the concentration of at least one gas emitted from the engine, at least one pump to draw gas from the engine, and at least one gas channel linked between the at least one detector and the at least one pump. The gas analyzer system may include at least one gas analyzer that may be a non-dispersive infrared analyzer, a Fourier transform infrared analyzer, an ultraviolet analyzer, a mass spectrometer, a mass analyzer comprising an electromechanical oscillator holding a substrate onto which particulate matter can accumulate, or a mass analyzer comprising a filter substrate onto which particulate matter can accumulate.

According to another aspect of the invention, the housing may include vibration-dampening means for reducing vibration of the gas analyzer system. The vibration dampening means may be shock-mounts for at least one component making up the gas analyzer system. The vibration dampening means may be shock-mounts for the housing. Another housing may be provided for supporting the housing, wherein the dampening means may be spacers between the housings. The dampening means may be shock-mounts for the outer housing. The gas analyzer system may include at least one gas analyzer that may be a non-dispersive infrared analyzer, a Fourier transform infrared analyzer, an ultraviolet analyzer, a mass spectrometer, a mass analyzer comprising an electromechanical oscillator holding a substrate onto which particulate matter can accumulate, or a mass analyzer comprising a filter substrate onto which particulate matter can accumulate.

According to another aspect of the invention, a hydrocarbon gas analyzer and method for analyzing at least the concentration of hydrocarbon present in a mixture of gases in a vehicle emission includes providing a sample cell, a source and a sensor for measuring concentration of hydrocarbon gas in the cell. A heater is provided that is adapted to heating the cell to a sufficiently high temperature to reduce deposits of hydrocarbon molecules present in the sample gas upon inner surfaces of the sample cell. This decreases loss of hydrocarbon gas and increases accuracy of measurement.

The hydrocarbon gas analyzer and method may further include a humidity sensor that measures humidity of the gas mixture for compensating the measured concentration values. The humidity sensor may be an infrared sensor. The source and sensor of the gas analyzer may consist of either an infrared source and sensor or an ultraviolet source and sensor. The heater may heat the cell to a temperature at or above 60 degrees centigrade, particularly for use with spark-ignition engines. The heater may heat the cell to a temperature at or above 175 degrees centigrade, particularly for use with compression ignition engines. The source and sensor may be held at a temperature that is lower than the temperature of the gas cell, such as by using a heat sink for removing heat from the source and/or the sensor. The heat sink may be a heat radiator or a heat pump. The source of the gas analyzer may be modulated. The heater may be a heater chamber around at least a portion of the sample cell or a heater element coupled with the sample cell. The gas analyzer may be assembled substantially without adhesive, thereby eliminating false readings from gases evaporating from the adhesive.

A method for measuring the concentration of hydrocarbon gas present in a mixture of gases in a vehicle emission using a spectral-absorption-based device, according to another aspect of the invention, includes transferring the sample in a heated channel and measuring concentration of the at least one component of the sample. The sample is transferred in a heated channel maintained at a sufficiently high temperature to reduce deposition of hydrocarbon molecules present in the sample upon the inner surfaces of the channel. Concentration of the at least one component is measured while maintaining the device and the sample at sufficiently high temperatures to reduce deposition of the hydrocarbon molecules present in the sample upon the inner surfaces of the device. This decreases the loss of the hydrocarbon gas and, consequently, increases the accuracy of the measurement.

The sample may be exhausted from a spark-ignition engine and the device may be at or above 60 degrees centigrade. The sample may be exhausted from a compression ignition engine and the device may be at or above 175 degrees centigrade.

A gas analyzer and method for analyzing at least the concentration of a nitrogen-based gas, a hydrocarbon-based gas, and/or a sulfur-based gas, according to another aspect of the invention, includes providing a sample chamber, at least one ultraviolet source emitting radiation through the sample chamber, at least one ultraviolet sensor sensing the radiation, and a control converting an output of the sensor to a value of a gas concentration in a sample gas in the sample chamber. The at least one ultraviolet source includes a discharge lamp having a discrete emission line at an absorption frequency for a particular nitrogen-based gas.

The gas analyzer and method may include providing another ultraviolet source, such as a light-emitting diode. The light-emitting diode may have a broadband emission and may be powered with a pulsed power source. The ultraviolet source may be powered with a steady-state power source. The ultraviolet source may comprise a container enclosing a mixture of gases comprising at least nitrogen. The container may have at least a portion that is transmissive to ultraviolet energy wherein energy is supplied to the container causing discharge of ultraviolet radiation. The mixture of gases may further include oxygen and may be at a pressure that is less than or equal to 1.0 millibars (100 Pa). The pressure may be greater than or equal to 0.4 millibars (40 Pa). The energy may be electromagnetic energy or may be RF energy supplied externally of the container. The container may further include at least one electrode supplying the energy. The electrode may be a hollow cathode. The electrode may be structured to concentrate the emitted ultraviolet energy.

The gas analyzer and method may include splitting means for dividing the radiant energy generated by the ultraviolet source into a first portion passing through the sample chamber and a second portion not substantially passing through the sample chamber. The splitting means may be an optical beam splitter. The splitting means may comprise a reflective surface reflecting the second portion of the radiant energy. The reflective surface may comprise the surface of an optical lens. The gas analyzer may further include another ultraviolet sensor sensing the second portion of the radiant energy generated by the ultraviolet source and producing another output wherein the control compensates for variation and light output of the ultraviolet source. The gas analyzer may further include a gas cell between the source and the sensor, a first light path defined between the light source and the detector assembly through the sample chamber, a second light path defined between the ultraviolet source and the sensor through the sample chamber and a control processing the output of the sensor. The cell envelopes a quantity of the gas to be detected and is in the first light path. The radiant energy from the ultraviolet source along the second light path received by the sensor does not substantially pass through the gas cell. The control processes the output of the sensor in order to compare radiant energy received by the sensor along the first and second light paths. The gas analyzer may include multiple ones of the gas cells each enveloping a different one of the gases to be detected wherein the control compares radiant energy received by the sensor assembly along the first and second light paths.

A method of detecting the concentration of a nitrogen-based gas, a hydrocarbon-based gas, and/or a sulfur-based gas present in a sample, according to another aspect of the invention, includes enclosing in a container a mixture of gases comprising at least nitrogen. The container includes at least one section substantially transparent to ultraviolet radiation energy. The method further includes providing input energy to the mixture of gases causing discharge of ultraviolet radiation energy. The method further includes directing the ultraviolet radiation energy emitted from the transparent section through the sample and measuring the portion of the ultraviolet radiation not absorbed by the gas in the sample. The method further includes calculating the concentration of the gas in the sample from its absorption of the ultraviolet energy.

The mixture may further comprise oxygen. The pressure of the mixture in the container may be less than or equal to 1.0 millibars (100 Pa). The pressure of the mixture in the container may be greater than or equal to 0.4 millibars (40 Pa). The input energy may be electromagnetic energy. The electromagnetic energy may be RF energy generated by a transmitter located externally to the container. The container may further include at least one electrode. The input energy may be applied through the electrode. The electrode may be a hollow cathode. The electrode may be structured to concentrate the emitted ultraviolet energy. The mixture of gases may include nitric oxide. The mixture of gases may include nitrogen oxide. The mixture of gases may include sulfur dioxide. The mixture of gases may include at least one noble gas.

The method may further include providing a light-emitting diode generating electromagnetic radiation energy and directing the energy from the diode through the sample. The method may further include pulsing the light-emitting diode. The energy from the diode may include at least one absorption band of nitrogen dioxide. The directing ultraviolet radiation energy may include directing the energy along a first light path substantially through a gas cell enveloping a sample of the gas to be detected thereby producing a first spectral signature and directing the energy along a second light path substantially bypassing the gas cell thereby producing a second spectral signature, wherein the measuring includes comparing the first and second spectral signatures to determine energy not absorbed by the gas in the sample. The directing may include dividing the ultraviolet radiation energy into a first portion substantially passing through the sample and a second portion not substantially passing through the sample. The method may further include providing multiple gas cells enveloping different gases to be detected and comparing the first and second spectral signatures for multiple gas signatures to determine the particular gas for the respective gas cell energy not absorbed by the gas in the sample corresponding to the gas in each of the gas cells. The calculating may comprise applying a precalculated calibration function relating concentration of the gas with absorption of ultraviolet radiation.

A real-time engine emission processing system and method for an internal combustion engine having an exhaust, according to another aspect of the invention, includes providing means for determining fuel consumption rate of the engine, means for determining concentration of a least one gas emitted from the exhaust of the engine, and calculating means for calculating mass flow rate of the at least one gas from the fuel consumption rate and the concentration of the at least one gas.

The system and method may be employed on the engine of a moving vehicle wherein the mass flow rate is combined with the speed of the vehicle to calculate emission expressed in grams per each mile driven by the vehicle. The means for determining fuel consumption rate of the engine may comprise an RPM sensor for the determination of the revolutions per minute of the engine, an oxygen sensor to measure the air-to-fuel mass ratio, and calculating means for resolving the revolutions per minute and the air-to-fuel mass ratio to the fuel consumption rate. The means for determining concentration of gases may comprise an infrared gas analyzer. The means for determining concentration of gases may comprise an electrochemical gas analyzer. The means for determining fuel consumption may include an interface to an onboard diagnostic system. The means for determining fuel consumption may comprise a fuel flow filter. The means for determining fuel consumption may comprise an analyzer for processing data generated from at least one fuel injector. The data generated from the at least one fuel injector may be generated from an interface to an onboard diagnostic system continuously generating fuel injector data. The data generated from the at least one fuel injector may be generated from electrical control signals measured at the at least one fuel injector. The system may further comprise means for calculating mass rates per unit distance and distance-detecting means for continuously detecting distance traveled by the vehicle. The distance-detecting means may comprise an interface to an onboard diagnostic system continuously generating distance data.

A device and method for measuring the hydrocarbon content in a sample of gas emitted from an engine, according to another aspect of the invention, includes providing a flame ionization detector and a hydrogen storage means. The flame ionization detector includes a burner fed by at least hydrogen and an electrometer sensing the charge of ionized molecules resulting from combustion of the hydrocarbons in the sample by the flame of the burner. The hydrogen storage means provides hydrogen to the burner and includes at least one metal hydride alloy contained in a storage container. The metal alloy is capable of absorbing and releasing hydrogen.

The device and method may include using the device for measurement of hydrocarbon content in a sample of gas emitted from a moving vehicle. The device may be used for measurement of hydrocarbon contents in a sample of gas emitted from a stationary vehicle operated under loaded and unloaded conditions. The device may include means for determining the flow of the gas for calculating the mass of the emitted hydrocarbons. The means to determine the flow of the gas may comprise a flow meter. The means for determining the flow of the gas may comprise an onboard diagnostic interface providing real-time data of engine parameters and calculating means to determine the flow from the data.

A real-time engine emission-reporting system and method, according to another aspect of the invention, includes providing a pollution concentration detector for detecting concentration of at least one pollutant within an engine exhaust gas and a gas analyzer for measuring the concentration of major carbon-based gases within the exhaust gas. Fuel flow means are provided for determining the flow rate of the fuel to the engine and calculating means are provided for calculating the mass flow of the pollutant from the concentration of the pollutant, the concentration of the major carbon-based gases, and the flow rate of the fuel. The pollutant may be a gaseous pollutant within the exhaust gas. The pollutant may comprise a particulate matter within the exhaust gas. The fuel flow may be a fuel flow meter. The fuel flow means may comprise an interface to an engine control module (ECM) which retrieves information in real time indicative of the fuel flow. The fuel flow means may comprise an interface to an engine control module (ECM) retrieving information in real time of engine parameters and a processor that is capable of resolving the flow rate of the fuel from the engine parameters. The engine parameters may be the engine intake airflow rate and the concentration of oxygen within the exhaust gas. The engine parameters may comprise the revolution of the engine and the volumetric displacement of the engine. The fuel flow means may comprise an interface to an engine control module (ECM) retrieving information in real time of the revolution rate of the engine and the volumetric displacement of the engine and a sensor for measuring concentration of oxygen within the exhaust gas and a processor that is capable of resolving the flow rate of the fuel from the revolution rate, the volumetric displacement, and the concentration of oxygen. The real-time engine emission-reporting system and method may be employed on the engine of a moving vehicle. The mass of the pollutant may be combined with the speed of the vehicle to calculate the emission of the vehicle expressed in grams of pollutant for each mile driven by the vehicle. A real-time on-road vehicle emission analyzer and method, according to another aspect of the invention, includes means for diluting exhaust gas from an engine of the vehicle and a gas analyzer system. The gas analyzer system is adapted to receive diluted exhaust gas from the means for diluting exhaust gas and determine at least one emission parameter from the diluted exhaust gas. The at least one emission parameter may be chosen from a concentration of at least one exhaust gas, a mass of at least one exhaust gas, a concentration of exhaust particulate matter, and mass of an exhaust particulate matter. The gas analyzer system may be an infrared gas concentration detector, an ultraviolet gas concentration detector, an electrochemical gas concentration detector, or a particulate concentration detector. The analyzer and method may include flow means for determining the flow rate of the exhaust gas. The electrochemical gas concentration detector may comprise a heated zirconia substrate for measuring concentration of nitric oxide. The flow means may be a gas flow meter. The flow means may comprise an interface to an engine control module (ECM) for retrieving information in real-time of engine parameters and a processor that is capable of resolving the flow rate of the exhaust gas from the engine parameters. The gas analyzer system may include at least one gas analyzer chosen from a non-dispersive infrared analyzer. The gas analyzer system may include at least one gas analyzer that may be a non-dispersive infrared analyzer, a Fourier transform infrared analyzer, an ultraviolet analyzer, a mass spectrometer, a mass analyzer comprising an electromechanical oscillator holding a substrate onto which particulate matter can accumulate, or a mass analyzer comprising a filter substrate onto which particulate matter can accumulate.

These and other objects, advantages and features of this invention will become apparent upon review of the following specification in conjunction with the drawings.

Brief Description Of The Drawings

Fig. 1 is a side elevation of a vehicle having a vehicular gas emission analyzer assembly according to the invention incorporated therein;
Fig. 2 is a perspective view of the vehicle gas emission analyzer assembly in Fig. 1, according to the invention;
Fig. 3 is the same view as Fig. 2 with a portion of the housing removed in order to reveal internal components thereof;

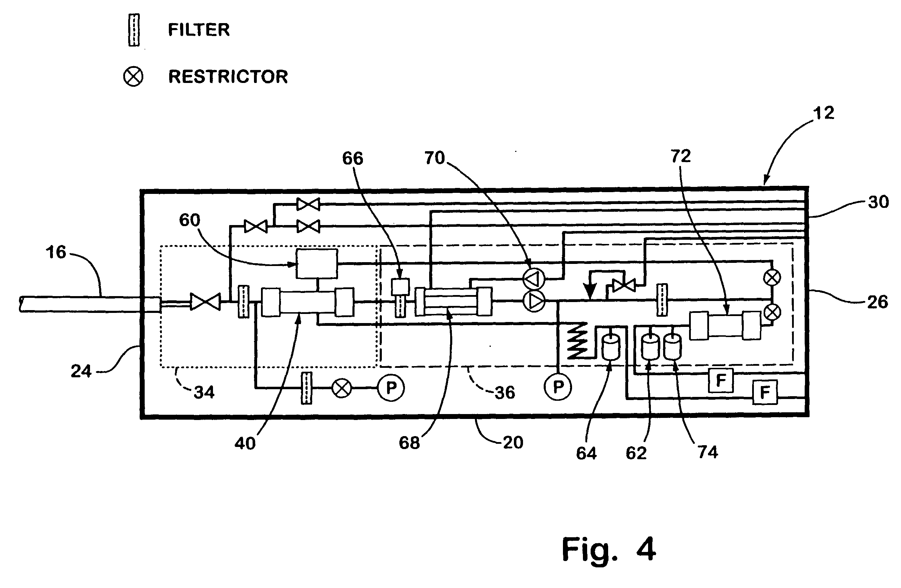

Fig. 4 is a gas flow block diagram, according to the invention;

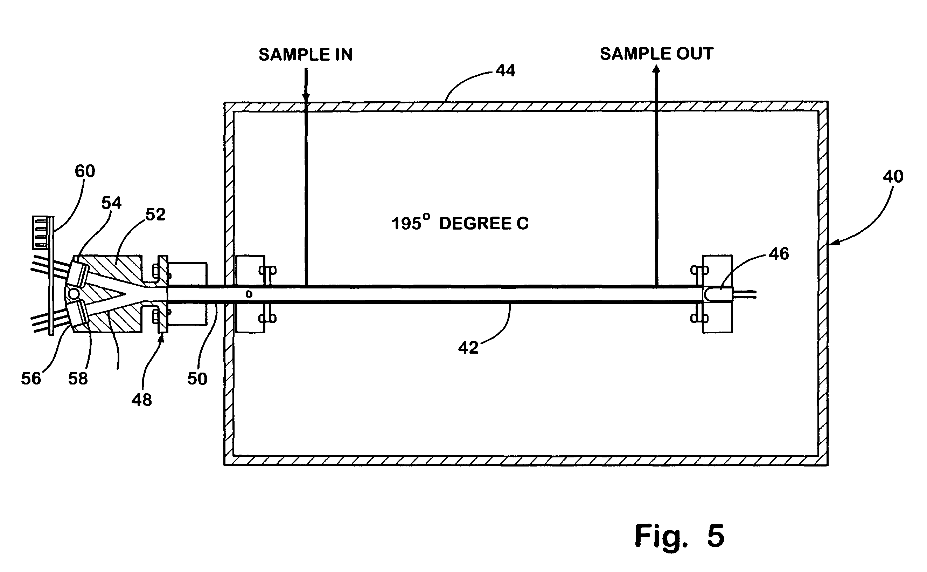

Fig. 5 is a side elevation of a hydrocarbon gas analyzer, according to the invention;
Fig. 6 is a diagram of a gas analyzer for analyzing at least the concentration of a gas in the ultraviolet region of the spectrum, according to the invention; and

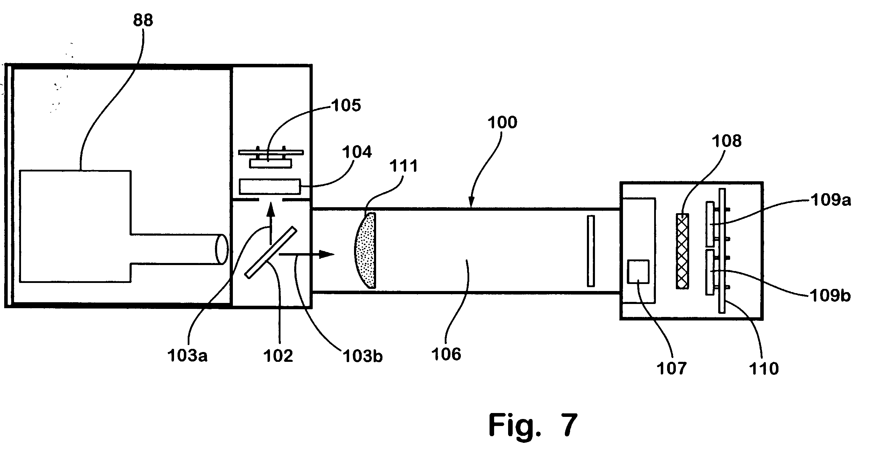

Fig 7 is an alternative embodiment of the gas analyzer in Fig. 6.

Detailed Description of the Drawings

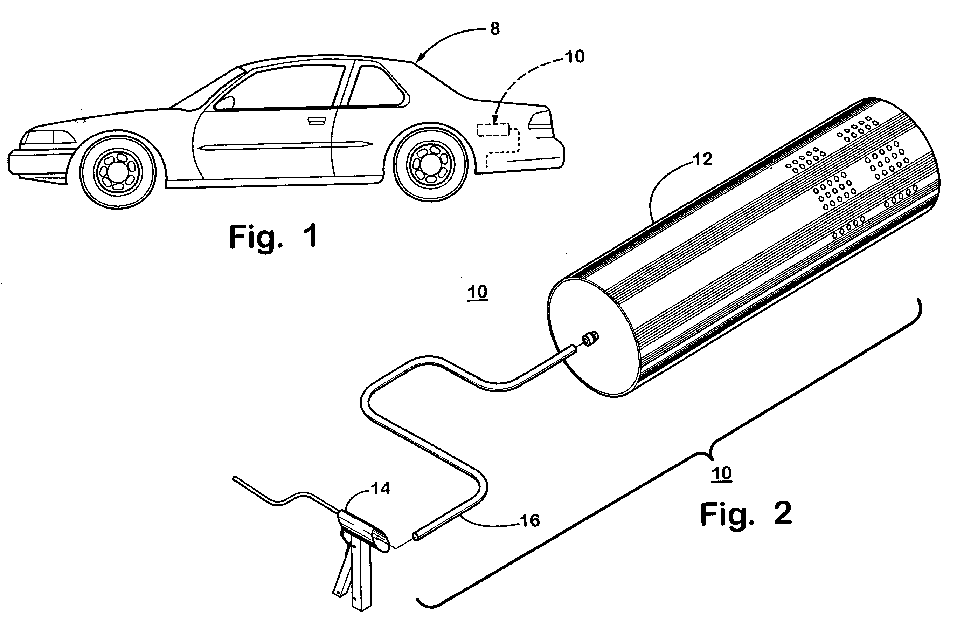

Referring now specifically to the drawings, and the illustrative embodiments depicted therein, a vehicular gas emission analyzer system 10, which is adapted to be incorporated in a vehicle 8, includes a vehicular gas emission analyzer assembly 12, an exhaust probe 14 adapted to sample emissions produced by the vehicle engine, and a line, or a conduit, 16 interconnecting exhaust probe 14 with emission analyzer assembly 12 (Fig. 1). Exhaust probe 14 may be a diluting probe that dilutes the exhaust sample prior to measuring particulate content, concentration or mass of one or more exhaust component. By vehicle is meant any device that uses an internal combustion engine. In particular, vehicle 8 is illustrated as a passenger car, but could also be a van; a truck; a locomotive; a construction apparatus, such as a dozer, an excavator, a paver, a trencher, or the like; airport ground equipment; agricultural equipment; and the like. Line 16 may be heated to a temperature of 60 degrees centigrade or higher, such as for use with a gasoline engine, or 175 degrees centigrade or higher, such as for use with a diesel engine. Exhaust probe 14 may be built into the vehicle's exhaust system, but may be removable if desired. The readings of gas emission analyzer system 10 may be combined with vehicle engine parameters in order to determine, for example, grams of emission per mile, or the like, as disclosed in commonly assigned United States Patents 5,099,680 and 6,085,582, the disclosures of which are hereby incorporated herein by reference. However, the readings of gas emission analyzer system 10 may be used to provide information on concentration of the various exhaust gases, _per se,_ or may be combined with information other than vehicle engine parameters. One useful parameter to combine with the output of gas emission analyzer system 10 to determine grams per mile, or mass flow, of the exhaust gases of its vehicle is fuel consumption rate of the vehicle, as disclosed in provisional patent application Serial No. 60/255,605 filed December 13, 2000, the disclosure of which is hereby incorporated herein by reference.

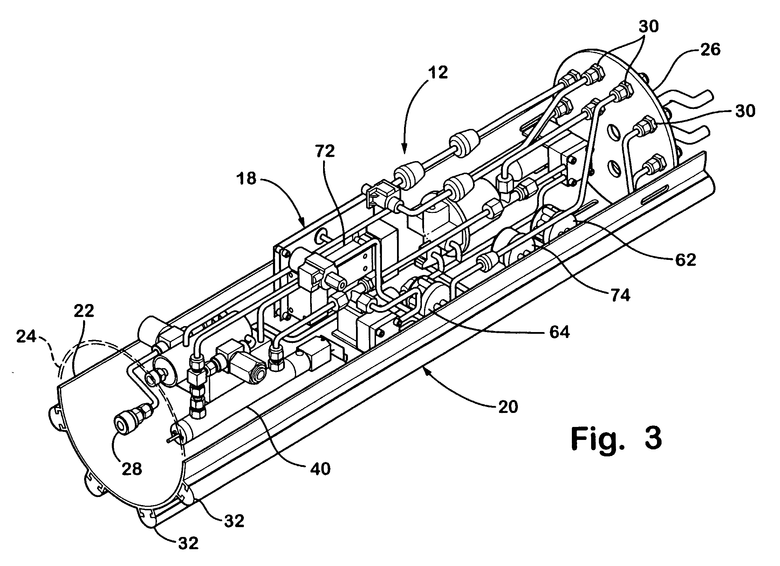

Vehicle gas emission analyzer assembly 12 may include a gas analyzer system 18 and a housing 20 for the gas analyzer system, a portion of which is shown in Fig. 2. Gas analyzer system 18 may utilize mass spectrometry, Fourier transform infrared sensing technology, non-dispersive infrared sensing technology, ultraviolet sensing technology, particulate matter sensing technology, gravimetric method utilizing a harmonic oscillating substrate, such as the TEOM Device marketed by R&P Company. The gravimetric device could be used to measure particulate mass by a mechanical or crystal supported resonance-based device made of a substrate which accumulates exhaust particles and measuring mass of the substrate by looking at resonance frequency of the support.

Only a portion of housing 20 is illustrated in Fig. 2 and housing 20 would entirely enclose gas analyzer system 18 in a substantially moisture impervious housing. Housing 20 includes a generally cylindrical shell 22, a first end plate 24, and an opposite end plate 26. End plate 24 is fitted with a connector 28 for receiving line 16. End plate 26 includes a series of connectors 30 for providing other external connections to gas analyzer system 18. These may include, by way of example, connections for the supply of calibration gases, as well as electrical connectors for supplying readings from gas analyzer system 18 via a hard-wire communication channel to an external system (not shown). Alternatively, gas analyzer system 18 may communicate readings to an external system (not shown) through a wireless communication channel, such as a radio frequency wireless channel, or the like. Another example of a wireless channel is infrared. Alternatively, gas analyzer system 18 may include a data-logger for recording data developed by the gas analyzer system 18. Housing 20 is adapted to be mounted external of the vehicle driver area, such as in the vehicle trunk, and may even be mounted at a portion of the vehicle that is external of the vehicle body, such as under the vehicle or within the engine compartment, where the housing is exposed to environmental elements, such as precipitation, road spray, car wash fluid, and the like. Housing 20 is an enclosed module that is substantially moisture impervious in order to be resistant to environmental elements. Gas emission analyzer system 10 may also be combined with a mass flow meter and other component to determine mass emission measurement, as disclosed in commonly assigned United States Patent 6,085,582 and patent application Serial No. 09/548,448, filed April 13, 2000, the disclosures of which are hereby incorporated herein by reference.

Housing 20 may include vibration dampening means, such as dampers 32, for reducing vibration of components defining gas analyzer system 18. Housing 20 may be received within an outer housing (not shown) with vibration dampers 32 acting as spacers or standoffs to dampen vibration that would, otherwise, be transferred from the external housing to housing 20. It should be understood that the external housing may, itself, be shock-mounted by vibration dampeners further reducing the transmission of vibration from the vehicle to the components defining gas analyzer system 18. Also, one or more individual components making up gas analyzer system 18 may be shock-mounted in housing 20. In the illustrative embodiment, housing 18 is in the form of an elongated housing, preferably having a generally cylinder shape, and most preferably a generally circular cylinder shape. However, it should be understood that other forms of an elongated housing may be utilized. Indeed, the diameter of housing 20 need not be uniform throughout the entire length. Preferably, housing 20 is aerodynamic in shape such that it may reduce drag on the vehicle upon which vehicle gas emission analyzer system 10 is externally mounted. Also, in order to facilitate external mounting, housing 20 may include seals, or the like, in order to resist the entry of environmental moisture, such as road splash, precipitation, and the like, from gas analyzer system 18

Housing 20 has an aspect ratio of length to diameter of 2:1 or greater. In the illustrative embodiment, the aspect ratio of housing 20 is 7:1 with the housing having a diameter of approximately 5 inches and a length of approximately 36 inches. It should be understood that, as component designs evolve, it is likely that housing 20 may decrease in length and diameter.

Housing 20 may be divided into an area 34 having components which operate at a similar temperature to each other which are different from components in another area 36 whose components all operate at a similar temperature to each other that is different from the components in area 34. Preferably, the operation temperatures of the components in areas 34 and 36 are above the dew point of the exhaust gas of a vehicle. The components of gas analyzer system 18 operate at a temperature that is substantially uninfluenced by supplemental cooling. These characteristics eliminate the necessity for specialized moisture separators to remove moisture condensed from the vehicle exhaust gas and eliminate the need for supplemental cooling systems.

In the illustrative embodiment, area 34 includes components operating at a temperature above 60 degrees centigrade and may be at or above 175 degrees centigrade depending upon the type of engine with which it is adapted to be used. For example, for a gasoline engine having a spark ignition, the operating temperature of the components may be at or above 60 degrees centigrade and, for a diesel engine having compression ignition, the components may be at or above 175 degrees centigrade. Components in area 36 operate at a temperature that is above the dew point of the vehicle exhaust gas, such as approximately 60 degrees centigrade. Areas 34 and 36 may be separated from each other by a dividing wall or may be opened to each other. Either way, areas, or zones, 34, 36 have a substantially consistent temperature in a direction laterally of housing 20, but vary in temperature in a direction longitudinally of housing 20.

Gas analyzer system 18 includes a hydrocarbon (HC) gas analyzer 40 used to measure the concentration of hydrocarbon gases in the vehicle exhaust. Gas analyzer 40 may include a sample cell 42 which is heated to an elevated temperature, such as a temperature of at least 60 degrees centigrade for a gasoline engine, such as a spark-ignition engine, and of at least 175 degrees centigrade for a diesel engine, such as a compression-ignition engine. Cell 42 is held at this temperature by using a heating element, or elements, and a controller. In the illustrative embodiment, cell 42 is placed in a heating chamber 44, but may, otherwise, be heated by a heating element directly coupled with the cell. An infrared source 46 is also provided and may be positioned within chamber 44. Infrared source 46 may generate a non-varying energy or may provide switched energy utilizing a mechanical shutter or electronic pulsating drive, such as disclosed in commonly assigned reissued U.S. Pat. No. Re. 36,277, the disclosure of which is hereby incorporated herein by reference.

Gas analyzer 40 may include a section 48 that is external of chamber 44. External section 48 may include a thermally insulated conduit 50, which is an extension of cell 42, and a block 52, which defines an optical splitter sending infrared energy to two infrared detectors 54. Each infrared detector includes a sensor 56 and at least one filter 58. One infrared filter is selected to transfer energy limited to the absorbency band of the measured HC gas, while the second is chosen to act as a reference to common mode variables, such as humidity. Block 52 is maintained as a selected stabilized temperature that is lower than or equal to the temperature of thermal chamber 44. A heat sink 60 is provided to remove heat from block 52. The heat sink may be a heat radiator, such as a finned assembly, or an active heat pump, such as a Peltier device.

A heated hydrocarbon gas analyzer enables the measurements of hydrocarbon concentration in the vehicle exhaust gas while maintaining its temperature at the temperature of the thermal chamber. This reduces deposition of hydrocarbon molecules present in the sample gas upon inner surfaces of the sample cell thereby decreasing loss of hydrocarbon gas and increasing accuracy of measurement. The insulated section 50 and the thermal pump device 60 ensure that the infrared detectors 54 are subject to relatively cooled and consistent and more precise temperatures. Another embodiment of the invention can be provided which places infrared source 46 outside of heated heating chamber 54, thereby further stabilizing the emitted infrared radiation. As previously set forth, another embodiment eliminates thermal chamber 44 by placing a heating element directly on cell 42.

An alternative hydrocarbon (HC) gas analyzer, of the type disclosed in provisional patent application Serial No. 60/297,463, filed June 12, 2001, the disclosure of which is hereby incorporated by reference, may be utilized to measure hydrocarbon gases in the vehicle exhaust. While the details of the alternative HC gas analyzer are disclosed in the '463 provisional patent application, suffice it to say, in contrast to utilizing infrared detection principles, the alternative HC gas analyzer utilizes a flame ionization detector including a burner that is fed by hydrogen and an electrometer which senses the charge of ionized molecules resulting from combustion of hydrocarbons in the sample gas by the flame of burner. The flame ionization device further includes a hydrogen storage device which provides hydrogen to the burner. The hydrogen storage device includes at least one metal hydride alloy contained in a storage container. The metal hydride alloy is capable of absorbing and releasing hydrogen. This provides a safe and reliable manner to supply hydrogen to the burner of the flame ionization device.

In addition to hydrocarbon gas analyzer 40, area 34 may include devices, such as a catalytic converter 60, for converting $NO_2$ into NO. In order to measure $NO_x$, a first NO cell 62 measures the concentration of $NO_x$ which contains an unknown combination of NO and $NO_2$. The gas is then passed through catalytic converter 60 which converts all of the $NO_2$ to NO. A second NO cell 64 measures the concentration of NO, which then may be compared with the concentration measured by NO cell 62 in order to determine the relative concentration of NO and $NO_x$.

Gas analyzer 18 may further include a heated filter 66, which operates at an elevated temperature at or above 70 degrees centigrade, and a drier 68. Gas may then be passed via a pump 70 to an infrared optical bench 72 of the type disclosed in commonly assigned reissued Patent Re. 36,277, the disclosure of which is hereby incorporated herein by reference. Optical bench 72 provides measurement for carbon dioxide, carbon monoxide, and other desired gases. Gas analyzer system 18 may further include an oxygen sensor 74 which is known in the art and may be a heated ceramic substrate, such as zirconium oxide, or an electrochemical sensor.

An ultraviolet gas analyzer 76 is provided which is capable of concurrently measuring the concentration of both NO and $NO_x$. Gas analyzer 76 includes a sample cell 78 and an ultraviolet source 80. Gas analyzer 76 additionally includes an ultraviolet sensor 82 which, in the illustrative embodiment, is a PIN diode 84 connected with an amplifier 86.

In the illustrative embodiment, ultraviolet source 80 includes a discharge lamp 88 which may be electrode less. Source 80 may further include an ultraviolet light-emitting diode (LED) 90. Discharge lamp 88 includes an enclosure 92, which encloses a gas mixture of nitrogen and oxygen, such as at a pressure of between 0.4 and 1.0 millibars (40 and 100 Pa), which may be energized with a high frequency transmitter 94. RF energy from high frequency may be coupled to the mixture of gas in enclosure 92 by a high frequency coil 96. Alternatively, one or more electrodes penetrating enclosure 92 may couple the output of transmitter 94 to the mixture of gas in enclosure 92. This causes the mixture of gas in enclosure 92 to emit ultraviolet radiation which is further filtered by interference filter 98. Electrode less discharge lamp 88, in combination with filter 98, has a discrete emission line at the absorption frequency of the gas to be detected, such as NO. If it is desired to determine both the concentration of NO and the combined gas of $NO_x$, a light-emitting diode 90 may be supplied which is energized by a pulsated waveform in order to differentiate the light generated by light-emitting diode 90 from that generated by electrode less discharge lamp 88. A half mirror 99 is provided to direct a portion of light-emitting diode 90 to sample cell 78 while passing a portion of the light produced by light-emitting diode 90 to a reference sensor 100. Reference sensor 100 produces an output $V_{ref}$ in order to provide for canceling common mode signals. Ultraviolet gas analyzer 76 may also be used to measure concentration of a sulfur-based gas or a hydrocarbon-based gas.

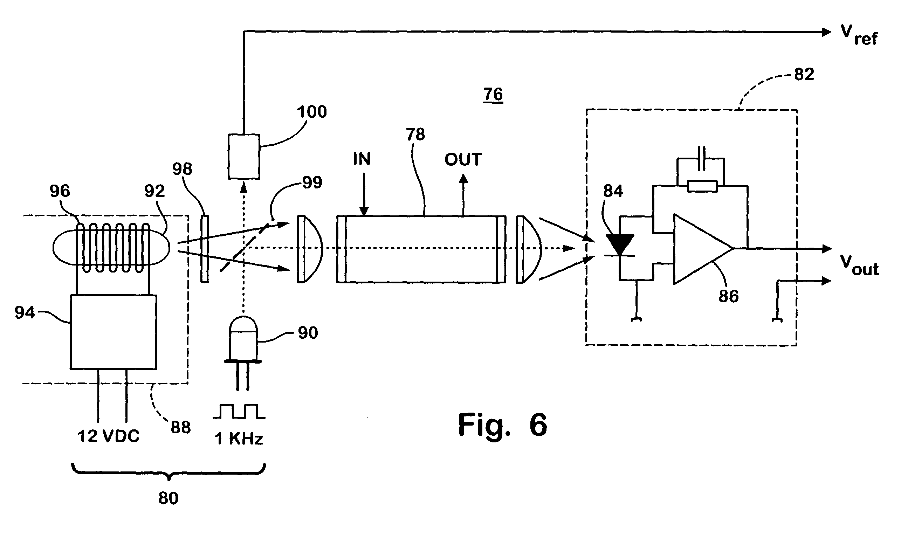

Fig. 6 illustrates an alternative embodiment of an ultraviolet gas analyzer 100 for analyzing concentration of a nitrogen-based gas, a sulfur-based gas, or a hydrocarbon-based gas. In the illustrative embodiment, a multiple gas analyzer 100, utilizing an ultraviolet source, such as discharge lamp 88, for the individual or simultaneous detection of $NO$, $NO_2$ and/or $SO_2$. This embodiment overcomes the spectral interferences that may exist among those gases if they are present together in the sample. In this embodiment, light is generated in at least a portion of the ultraviolet spectrum from a lamp 101, such as an electrical discharge lamp 88, and is split by a beam splitter 102. A portion 103 of the ultraviolet energy is directed to a filter 104 and an ultraviolet detector 105. The purpose of this configuration is to detect any energy variations of lamp 101 and to compensate the gas concentration readings influenced by these lamp variations.

A remaining portion of the energy 103b is passed through a test gas, or sample, chamber 106 where it is being absorbed by the gas components of the sample. A gas cell 107 and interference filters 108 resolve the gas spectral interferences between the $NO_2$, $SO_2$ and $NO$ gases. A detector assembly 110 comprises multiple ultraviolet detectors 109a, 109b to detect various gas absorbance values for calculating their corresponding concentrations.

Gas cell 107 includes a gas having the contour of the gas to be detected, preferably the gas itself. As such, gas cell 107 may include $NO$, $NO_2$, $SO_2$, or the like. Gas cell 107 absorbs the spectral band that is unique to the gas within cell 107 leaving only the portion of the spectral band that is not unique to the gas in cell 107. As a result, the light absorbed by ultraviolet detector 109b includes only a portion of the spectral band that is not unique to the gas in cell 107. A remaining portion of energy 103b passed through gas cell 106, where it is being absorbed by the gas components of the sample, is received by ultraviolet detector 109a without passing through gas cell 107. By subtracting the output of ultraviolet detector 109b from the output of ultraviolet detector 109a, a reading of concentration of the gas in gas cell 106 which matches that in gas cell 107 is obtained substantially free from spectral interferences from all other gases in the sample cell 106. For example, if the gas concentration being measured is $NO$, apparatus 100 determines concentration of gas $NO$ substantially free from interference from $NO_2$, $SO_2$, water vapor, and any other gas in the test gas chamber.

In the illustrative embodiment, a single gas cell 107 is utilized. However, multiple gas cells could be individually positioned sequentially in the path of energy 103b, such as by utilizing the principles disclosed in commonly assigned United States Patent 5,184,017, the disclosure of which is hereby incorporated herein by reference. Such positioning device may include a stepper motor, asynchronous motor, a piezoelectric chopper, or other known positioning device. Alternatively, more than one gas cell may be positioned at a time between the ultraviolet source and the detector, with separate light paths defined through each of the cells.

Advantageously, $NO_x$ gas analyzer 76 may be operated without the necessity for coolers, thereby allowing it to be used in area 36 having a temperature of 60 degrees centigrade or higher. Furthermore, gas analyzer 76 allows both components of $NO_x$, namely, $NO$ and $NO_2$, to be concurrently determined in a common sample cell without the necessity for converting $NO_2$ to $NO$. However, it should be understood that discharge lamp 88 may be used in association with individual sample cells and detectors and may be used in combination with a converter, such as a catalytic converter in order to convert $NO_2$ to $NO$ in order to separately determine the concentration of $NO$ and $NO_2$ in a more conventional manner. Although gas analyzer 76 has been illustrated for use for measuring a nitrogen-based gas, its principles may also be used for measuring a sulfur-based gas, such as $SO_2$, or a hydrocarbon-based gas.

Because gas analyzer system 18 is operated at a temperature level that is above the dew point of the exhaust gas, water vapor is not appreciably removed from the exhaust gas. Thereby, in contrast to optical benches operated at lower temperatures, water vapor may have a significant concentration thereby influencing the relative concentration readings of other gases. This may be overcome by utilizing the common mode sensor of either IR bench 72 or HC bench 40, or both, to measure the concentration of water vapor as any other gas in the gas mixture. Once the concentration of water vapor is measured in this manner, it can be used to compensate for interference with the measurements of other component gases in the same manner that other component gases are used to compensate for the interference thereof with other gases utilizing an iterative process. Although the common mode channel may be utilized to detect water vapor, the common mode channel may continue to be available for use during warm-up of the components of gas analyzer system 18 in order to determine common mode components and used after the warm-up of the components of gas analyzer system 18 to measure water vapor gas concentration in the exhaust gas in the manner set forth above.

As used herein, fuel specific emissions are the mass fractions of each pollutant to the fuel in the combusted air/fuel mixture. This fraction may be computed directly from concentrations of the measured exhaust constituents. For example, to express $NO$ fuel specific emissions in grams of $NO$ per gram of fuel, the mole fraction of $NO$ to fuel burned is calculated. This is the ratio of the measured concentration of $NO$ to the sum of the $CO$, $HC_1$, and $CO_2$ concentrations in the exhaust, which reflect the number of moles of fuel that is consumed per mole of exhaust. The mass fraction of $NO$ to fuel burned is then computed by multiplying the mole fraction by the ratio of the molecular weights of $NO$ to the molecular weight of the fuel. This mass fraction is often referred to as an emissions index, or EINO, and is expressed in the equation below. Fuel specific emissions for all other species are computed in a similar manner.

$$EINO\left(\tfrac{g\_NO}{g\_fuel}\right) = \left(\frac{[NO]}{[CO]+[HC_1]+[CO_2]-[CO_2^{\cdot}]_{ambient}}\right) \times \left(\frac{MW_{NO}}{MW_{fuel}}\right)$$

where the square brackets denote concentration and MW stands for molecular weight. Computing fuel specific emissions, particularly with diesel engines, avoids additional measurements such as torque, speed, exhaust flow rate, or fuel flow rate. Emission can be completely characterized when the vehicle is operating under various driving and loading conditions.

Measuring fuel flow through a tube can be accomplished non-invasively and accurately with the use of ultra-sonic sensors that are commercially available. These sensors can also detect the inner flow diameter of the tube, such as a short section of straight tubing. However, diesel engines may have more than one fuel tube supplying the engine, and one or more fuel return tubes that recirculate fuel back to the engine. This makes direct fuel flow measurement difficult because three or more sensors would be used simultaneously.

Direct exhaust flow measurement may be used as another viable method to provide necessary data to compute mass emissions. If exhaust flow is measured, mass emissions may be computed for a specific pollutant by multiplying the measured exhaust flow rate (corrected to standard temperature and pressure) by the pollutant concentration and density at standard conditions.

$$Mass(g / sec) = Exhaust\_flow \times [concentration] \times Density$$

It is still possible to compute fuel flow and mass emissions without a direct measurement of fuel flow or exhaust flow. This can be accomplished with the use of a device, such as a fast-response zirconia oxygen sensor, to measure air/fuel mass fraction from the exhaust, and an RPM probe. The latter can facilitate airflow computations based on engine displacement and volumetric efficiency estimates at various engine speeds. Manifold pressure is generally not required for diesel engines, since there is no throttle plate. The cylinder is near atmospheric pressure at the bottom of the intake stroke. In the case of turbocharged engines, the inlet pressure may be elevated above atmospheric levels by up to 10%. In this case, the efficiency of the turbocharger would be accounted for. A manifold pressure sensor can be added, or an efficiency map can be supplied from the manufacturer. Fuel flow can then be determined as described above for gasoline engines.

Vehicle engine emission can be reported utilizing a pollution concentration detector for detecting concentration of one or more pollutants within an engine exhaust. A gas analyzer would be used for measuring the concentration of one or more carbon-based gases within the exhaust gas. A fuel flow measuring device, such as a fuel flow meter, or data from the engine control module, or the like, may be used to determine the flow rate of the fuel to the engine. A processor can be utilized to calculate mass flow of the pollutant from the following parameters: 1) concentration of the pollutant, 2) concentration of the carbon-based gas, and/or 3) the flow rate of the fuel.

Changes and modifications in the specifically described embodiments can be carried out without departing from the principles of the invention which is intended to be limited only by the scope of the appended claims, as interpreted according to the principles of patent law including the doctrine of equivalents.

**Claims**

1. A vehicular gas emission analyzer assembly for a vehicle, comprising:

   a gas analyzer system adapted to determine at least one emission parameter from an internal combustion engine, said at least one emission parameter chosen from (i) concentration of at least one exhaust gas, (ii) mass of at least one exhaust gas, (iii) concentration of exhaust particulate matter; and (iv) mass of exhaust particulate matter; and
   a housing for said gas analyzer system.

2. The analyzer assembly in claim 1, wherein said housing is substantially moisture impervious in order to be resistant to environmental elements.

3. The analyzer assembly in claim 1 or 2 wherein said housing is adapted to mounting at an external portion of a vehicle body.

4. The analyzer assembly in any preceding claim wherein said housing has a length and a width, said length and width of said housing defining an aspect ratio (length:width), wherein said aspect ratio is greater than or equal to two (2).

5. The analyzer assembly in any preceding claim including a communication channel for communicating data from said at least one gas detector to a system outside of said housing.

6. The analyzer assembly in claim 5 wherein said communication channel is a wireless communication channel.

7. The analyzer assembly in any preceding claim including vibration damping means to reduce vibration of components defining said gas analyzer system.

8. The analyzer assembly in any preceding claim wherein said gas analyzer system includes at least one gas analyzer chosen from (i) a non-dispersive infrared analyzer, (ii) a Fourier transform infrared analyzer, (iii) an ultraviolet analyzer, (iv) a mass spectrometer, (v) a mass analyzer comprising an electromechanical oscillator holding a substrate onto which particulate matter can accumulate, and (vi) a mass analyzer comprising a filter substrate onto which particulate matter can accumulate.

9. The analyzer assembly in any preceding claim wherein said housing is substantially in the form of a cylinder.

10. The analyzer assembly in claim 9 wherein said housing is substantially in the form of a circular cylinder.

11. The analyzer assembly in any preceding claim including an interface for retrieving measured parameters of a vehicle engine, wherein said measured parameters can be combined with an output of said gas analyzer system.

12. The analyzer assembly in claim 11 wherein said measured parameters are in a serial data stream.

13. The analyzer assembly in any preceding claim including means for measuring flow rate of the emissions of the vehicle.

14. The analyzer assembly in any preceding claim wherein said housing has a generally aerodynamic shape.

15. The analyzer assembly in any preceding claim, wherein said housing defines multiple internal zones, each of said zones being at a different temperature.

16. The analyzer assembly in claim 15 for calculating the mass of said at least one exhaust gas in grams per each mile driven by the vehicle.

17. The analyzer assembly in claim 15 or 16 wherein each of said internal zones has a substantially consistent temperature in a direction laterally of the housing and wherein said zones vary in temperature from each other in a direction longitudinally of the housing.

18. The analyzer assembly in any preceding claim including a volumetric flow meter adapted to be attached to an exhaust tailpipe of the vehicle and wherein said mass is determined by resolving said measured concentration and volumetric exhaust gas flow measured by said volumetric flow meter.

19. The analyzer assembly in any preceding claim including a probe adapted to withdraw exhaust from a vehicle tailpipe.

20. The analyzer assembly in claim 19 including a heated line connecting said probe with said housing.

21. The analyzer assembly in any one of claims 15-21 wherein said gas analyzer system operates substantially uninfluenced by supplemental cooling.

22. The analyzer assembly in any one of claims 15-21 wherein said gas analyzer system operates at a temperature that is at or above the dew point of the vehicle exhaust gas.

23. The analyzer assembly in claim 22 wherein said gas analyzer system further includes calculating means for compensating said emission parameter for the effect of humidity present in said exhaust gas.

24. The analyzer assembly in any one of claims 15-22 wherein said gas analyzer includes a heated device for measuring concentration of hydrocarbon, said heated device at a temperature sufficiently high to reduce the deposit of hydrocarbon materials on said heated device.

25. The analyzer assembly in claim 24 wherein said heated device comprises an infrared-based gas concentration reader or a flame ionization device.

26. The analyzer assembly in claim 24 wherein said device for measuring concentration of hydrocarbon is heated to a temperature at or above 60 degrees centigrade.

27. The analyzer assembly in claim 26 wherein said gas analyzer is adapted to spark-ignition engines.

28. The analyzer assembly in claim 24 wherein said device for measuring concentration of hydrocarbon comprises a flame ionization device heated to a temperature at or above 175 degrees centigrade.

29. The analyzer assembly in claim 28 wherein said gas analyzer is adapted to compression-ignition engines.

30. The analyzer assembly in claim 15 wherein said gas analyzer includes at least one device for measuring $NO_x$ which operates substantially without supplemental cooling of said exhaust gas.

31. The analyzer assembly in claim 30 wherein said device for measuring $NO_x$ utilizes ultraviolet detection techniques.

32. The analyzer assembly in claim 30 wherein said device for measuring $NO_x$ utilizes a heated zirconia detector.

33. The analyzer assembly in claim 30 wherein said device for measuring $NO_x$ utilizes an electrochemical cell.

34. The analyzer assembly in claim 15 wherein said gas analyzer includes at least one device for measuring $NO_x$ which utilizes ultraviolet detection techniques.

35. The analyzer assembly in claim 34 wherein said gas analyzer includes an ultraviolet discharge lamp.

36. The analyzer assembly in any preceding claim wherein said gas analyzer includes at least one gas detector to measure the concentration of at least one gas emitted from the engine, at least one pump to draw gas from the engine and at least one gas channel linking between said at least one detector and said at least one pump.

37. The analyzer assembly in claim 7 wherein said vibration dampening means comprises shock-mounts for at least one component making up said gas analyzer system.

38. The analyzer assembly in claim 7 wherein said vibration dampening means comprises shock-mounts for said housing.

39. The analyzer assembly in claim 7 including another housing supporting said housing, wherein said dampening means comprises spacers between said housing and said another housing.

40. The analyzer assembly in claim 39 wherein said dampening means further comprises shock-mounts for said another housing.

Fig. 1

Fig. 2

Fig. 3

Fig. 4

FILTER

RESTRICTOR

**Fig. 5**

195° DEGREE C

EP 1 176 412 A2

Fig. 6

**Fig. 7**